# EUROPEAN PATENT APPLICATION

(11) **EP 4 761 243 A1**
(43) Date of publication of application: **17.06.2026**
(21) Application number: 24307071.1
(22) Date of filing: 10.12.2024
(51) Int. Cl.: H04N 19/70, G06T 13/40

(54) **HYBRID MODE 3D GAUSSIAN SPLAT SIGNALING**

(71) Applicant: InterDigital CE Patent Holdings, SAS, 75017 Paris (FR)
(72) Inventor: LE CLERC, Francois, 35590 L'HERMITAGE (FR); COVA REGATEIRO, João Pedro, 35220 CHATEAUBOURG (FR); BOYER, Antoine, 35200 RENNES (FR)
(74) Representative: Vossius & Partner Patentanwälte Rechtsanwälte mbB

(57) **Abstract**

Some embodiments of a method may include: obtaining avatar mesh data and avatar images captured from different viewpoints associated with an avatar; obtaining a plurality of processed 3D Gaussians fitted to the avatar mesh data and avatar images; determining geometric parameters associated with the plurality of processed 3D Gaussians; determining appearance parameters associated with the plurality of processed 3D Gaussians; populating an avatar data structure associated with the geometric and appearance parameters; encoding the avatar data structure to generate Avatar JSON Interchange File (AJIF) data; and transmitting the encoded AJIF data to a device.

## Description

### INCORPORATION BY REFERENCE

The present application incorporates by reference in their entirety the following applications: European Patent Application Serial No. EP24307070.3, entitled "HYBRID MODE 3D GAUSSIAN SPLAT FITTING FOR AVATARS" and filed December 10, 2024 ("'070 application"); European Patent Application Serial No. EP24306566, entitled "STITCHED GAUSSIAN MIXTURE IN SCENE DESCRIPTION" and filed September 25, 2024 ("`566 application"); European Patent Application Serial No. EP24306342, entitled "GENERAL SIGNALING OF MODEL PROPERTIES ENCODING IN SCENE AND AVATAR DESCRIPTIONS" and filed August 8, 2024 ("`342 application"); European Patent Application Serial No. EP24306025, entitled "3D GAUSIANS SPLATTING IN SCENE DESCRIPTION" and filed June 26, 2024 ("'025 application"); European Patent Application Serial No. EP24305537, entitled "3D GAUSSIANS SPLATTING IN SCENE DESCRIPTION" and filed April 5, 2024 ("`537 application"); and International Patent Application Serial No. PCT/EP2024/078214, entitled "AVATAR JSON INTERCHANGE FILE FORMAT" and filed October 8, 2024 ("`214 application"); and European Patent Application Serial No. EP24305094, entitled "AVATAR JSON INTERCHANGE FILE FORMAT" and filed January 15, 2024 ("'094 application").

### BACKGROUND

The present application is related to 3D Gaussian splatting.

### SUMMARY

An example method in accordance with some embodiments may include: obtaining avatar mesh data and avatar images captured from different viewpoints associated with an avatar; obtaining a plurality of processed 3D Gaussians fitted to the avatar mesh data and avatar images; determining geometric parameters associated with the plurality of processed 3D Gaussians; determining appearance parameters associated with the plurality of processed 3D Gaussians; populating an avatar data structure associated with the geometric and appearance parameters; encoding the avatar data structure to generate Avatar JSON Interchange File (AJIF) data; and transmitting the encoded AJIF data to a device.

For some embodiments of the example method, the avatar mesh data and the avatar images captured from different viewpoints correspond to a head of the avatar.

For some embodiments of the example method, the 3D Gaussians were processed using an adaptive density control process.

For some embodiments of the example method, the 3D Gaussians were processed using a spatial offsets neural network process.

For some embodiments of the example method, the 3D Gaussians were processed using an appearance neural network process.

Some embodiments of the example method may further include determining spatial offsets neural network parameters associated with the appearance parameters.

Some embodiments of the example method may further include determining appearance neural network parameters associated with the appearance parameters.

Some embodiments of the example method may further include determining an expression encoding type used to represent a facial expression corresponding to the avatar.

For some embodiments of the example method, the expression encoding type is either a blendshape-type encoding or a principal component analysis (PCA)-type encoding.

For some embodiments of the example method, populating the avatar data structure associated with the geometric and appearance parameters comprises populating an avatar expression type with the determined expression encoding type.

For some embodiments of the example method, determining appearance parameters further comprise: determining a representation basis for the facial expression; determining number of weights for representing the facial expression; and determining weights for representing the facial expression, wherein the appearance parameters comprise the representation basis for the facial expression, the number of weights for representing the facial expression, and the weights for representing the facial expression.

For some embodiments of the example method, populating the avatar data structure associated with the geometric and appearance parameters comprises populating the avatar data structure using the representation basis for the facial expression, the number of weights for representing the facial expression, and the weights for representing the facial expression.

Some embodiments of the example method may further include determining neural network parameters associated with a multilayer perceptron (MLP).

For some embodiments of the example method, fitting the avatar mesh data with a set of 3D Gaussians comprises initializing a three-dimensional Gaussian splatting (3DGS) model.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example representation of a 3D Gaussian according to some embodiments.
FIG. 3 is a schematic illustration showing an example configuration for rendering of an image pixel from a set of 3D Gaussians according to some embodiments.
FIG. 4 is a schematic illustration showing an example 3D Gaussian splatting model for the face of an avatar according to some embodiments.
FIG. 5 is a flowchart illustrating a first example process for fitting the parameters of a 3D Gaussian splatting model to multiple views of a 3D scene according to some embodiments.
FIG. 6 is a flowchart illustrating a second example process for fitting the parameters of a 3D Gaussian splatting model to multiple views of a 3D scene according to some embodiments.
FIG. 7 is a flowchart illustrating an example process for generating AJIF description data using 3D Gaussian splatting model parameters according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

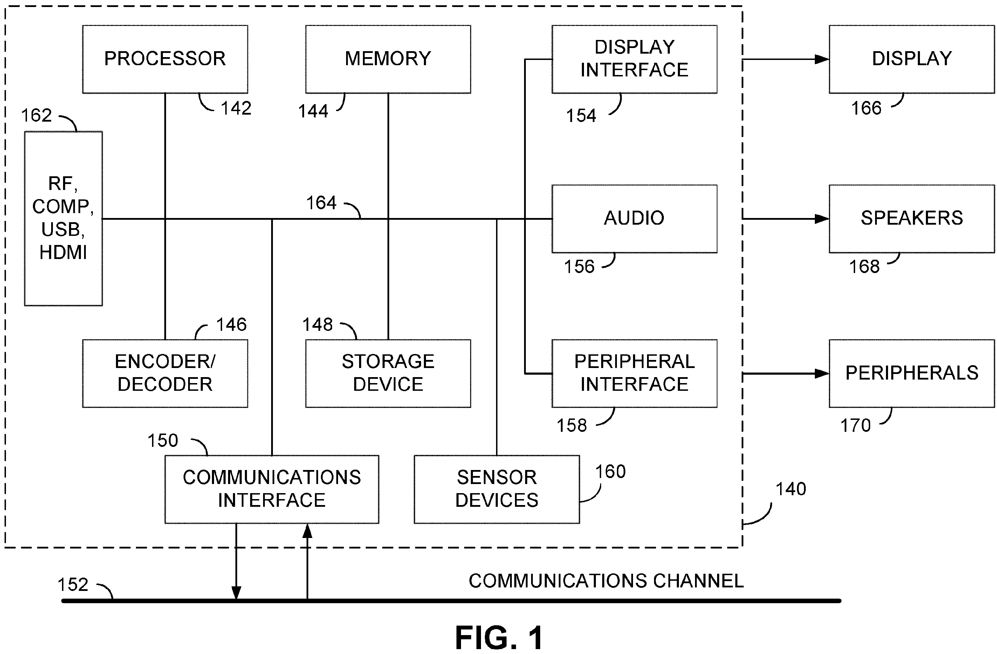

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the representation of avatars in 3D virtual environments. Such representations are used, for instance, in "metaverse" frameworks, where avatars act as proxy representations for users. They allow users to interact with other users each represented by their own avatar, as well as with real world elements, through virtual representations of these elements. Specifically, the application deals with avatars that are photorealistic reconstructions of the heads of human characters. This type of avatar is useful, for instance, in videoconferencing applications, in which the participants are represented by talking heads. The modeling of an avatar using a 3D Gaussian Splatting (3DGS) model is presented in the paper, Kerbl, B., et al, 3D Gaussian Splatting for Real-Time Radiance Field Rendering, 42:4 ACM TRANS. ON GRAPHICS 139-1 (2023) (*"Kerbl'*)*.*

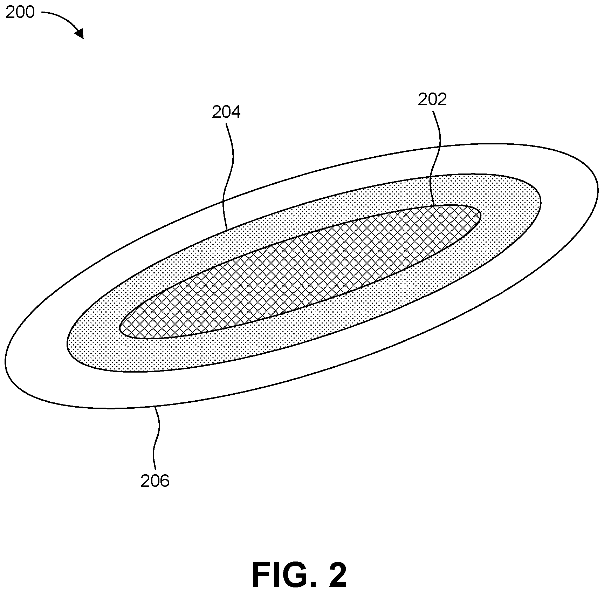

FIG. 2 is a schematic illustration showing an example representation of a 3D Gaussian according to some embodiments. For some embodiments, each 3D Gaussian in a 3DGS model may be defined by the geometric properties of its covariance matrix Σ, represented by an ellipsoid in 3D space, as well as by an opacity value and a viewpoint-dependent color. In the most general setting, the covariance matrix Σ is represented by the position P of its center, a 3D rotation matrix R, and a 3D vector S of scaling coefficients. The opacity value is a scalar floating-point coefficient between 0 and 1. The viewpoint-dependent color may be represented, according to known prior art, by a set of Spherical Harmonics coefficients corresponding to a Spherical Harmonics basis of predetermined degree. A 3D Gaussian 200 is represented on FIG. 2 by three ellipsoids 202, 204, 206. The interior of each ellipsoid 202, 204, 206 corresponds to the domain of 3D space inside in which the probability density of the Gaussian exceeds a certain value.

For instance, the domain inside the inner ellipsoid 202 of FIG. 2 may represent a region of 3D space in which the density of the Gaussian is higher than 80% of its maximal value. The domain inside the middle ellipsoid 204 may represent a region of 3D space in which the density of the Gaussian is higher than 60% of its maximal value. The domain inside the outer ellipsoid 206 may represent a region of 3D space in which the density of the Gaussian is higher than 40% of its maximal value.

The 3D Gaussian Splatting (3DGS) model represents a 3D scene using a plurality of 3D Gaussians. The scene is imaged by multiple cameras that provide different viewpoints of the scene. A 3DGS model fitted to the images representing these multiple viewpoints allows a synthesis of images of the scene under novel viewpoints that differ from the input viewpoints.

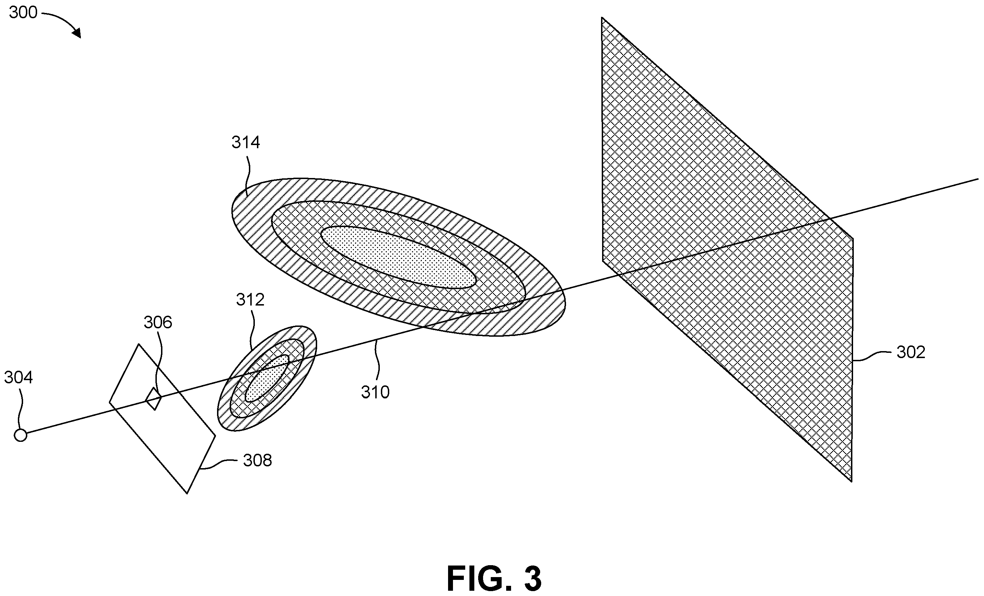

FIG. 3 is a schematic illustration showing an example configuration for rendering of an image pixel from a 3D Gaussian Splatting model according to some embodiments. A system 300 used for synthesis of an image of a 3D scene under a specified viewpoint is shown in FIG. 3. For illustration purposes, the scene is represented as a planar patch 302. The viewpoint is specified as a virtual camera with a given optical center 304, a viewing direction 310, and a focal length that defines the distance between the camera optical center and its image plane 308. The pixels, such as the pixel 306 shown in FIG. 3, that make up the camera image lie on this camera image plane 308.

Assuming a 3DGS model is available for the scene, the color of each pixel 306 of the synthesized image from the considered viewpoint and corresponding to the virtual camera, may be computed as described here. A ray 310 is cast from the optical center of the camera towards the position of the considered pixel 306 in the image plane 308. The ray is projected out from the camera center to the position of the considered pixel in the image plane.

Along its path from the optical center of the camera, the ray 310 traverses the 3D Gaussians that make up the 3DGS model. For clarity, only two Gaussians 312, 314 are shown in FIG. 3. Each traversed 3D Gaussian is projected to the camera image plane. The density value of the projected Gaussian at the location of the considered pixel 306, multiplied by the opacity of the Gaussian, defines its relative weight, with respect to the other Gaussians, on the intensity of the computed pixel. The color of the contribution of the projected Gaussian is computed from its Spherical Harmonics coefficients and from the direction of the considered ray 310 relative to the orientation of the covariance matrix Σ of the Gaussian.

The densities, opacities, and colors of the Gaussians are accumulated following a differentiable rasterization scheme to determine the color of the considered pixel 306 in the image plane 308 of the virtual camera.

The geometrical, color, and opacity parameters of the 3D Gaussians making up the 3DGS model are computed from the input images and the known corresponding viewpoints. The computation is based on an optimization process that matches the color intensities of the pixels synthesized as described above from the 3DGS model to the ground truth color intensities of the same corresponding pixels in the input views.

An adaptive density control scheme, for some embodiments, is introduced in this optimization process. At predetermined iterations of the optimization, some 3D Gaussians, typically with very low opacities, are pruned out. Other 3D Gaussians are duplicated or split into two close 3D Gaussians in areas where the 3DGS model is not dense enough to properly render the scene.

In the original description in *Kerbl,* a 3DGS model is fitted to a set of static images of a scene captured from different viewpoints using a set of cameras. Alternatively, a 3DGS model also may be fitted to a monocular video of a 3D scene. In this setting, the relative viewpoint of the camera on the scene must change across frames so that different frames provide different viewpoints on the scene, similarly to the multi-view capture setting.

### Avatar Representation Using 3D Gaussian Splatting Models

In the original presentation of 3DGS made by *Kerbl,* the positions and orientations of the Gaussians in 3D space are not bound to the surfaces of the objects making up the 3D scene. Having a 3DGS model that is easily animatable is an extra, desirable feature for the special case in which the 3D scene is a human face, which is considered in this application.

Since an animation is typically obtained by deforming a mesh of the avatar head, this desirable feature translates into a constraint that the 3DGS model should be bound to the geometry of a mesh of the avatar head. As understood, an avatar head mesh may be obtained by fitting a deformable head mesh template to a set of views of the avatar head, which are inputs to obtaining the 3DGS model. Furthermore, as understood, the binding of the 3DGS model to the avatar head mesh may be obtained by constraining each 3D Gaussian center to lie on a particular face of the avatar head mesh.

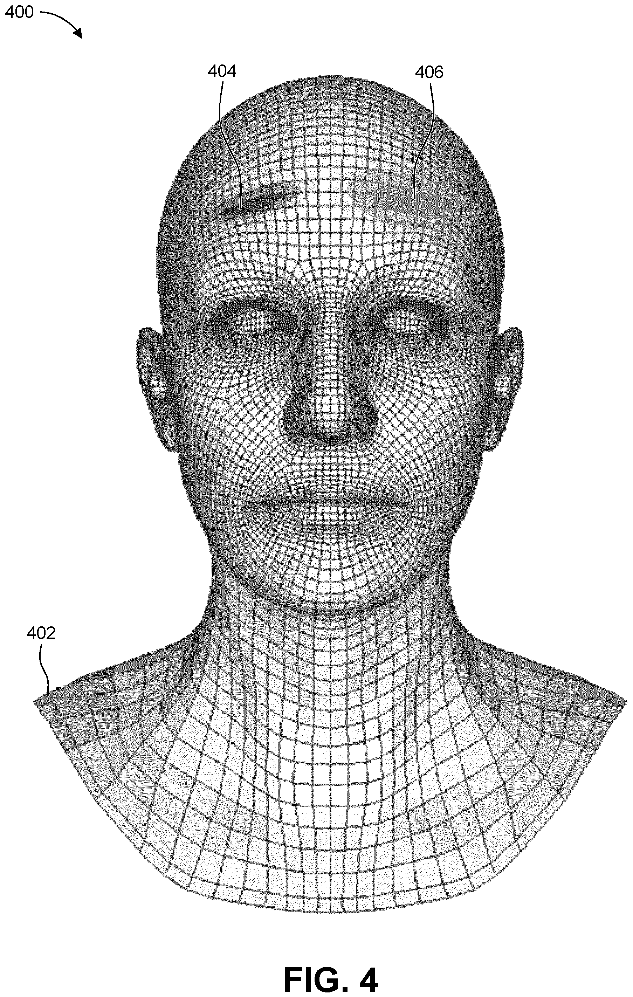

FIG. 4 is a schematic illustration showing an example 3D Gaussian splatting model for the face of an avatar according to some embodiments. FIG. 4 illustrates a 3DGS model 400 for the head of an avatar. The mesh of the avatar head 402 is computed independently of the 3DGS model and provided as an input to the 3DGS fitting process. For example, the 3DGS model includes two example 3D Gaussians 404, 406. The centers of these two Gaussians lie on the surface of the mesh.

### 3D Gaussian Splatting Avatar Model Fitting

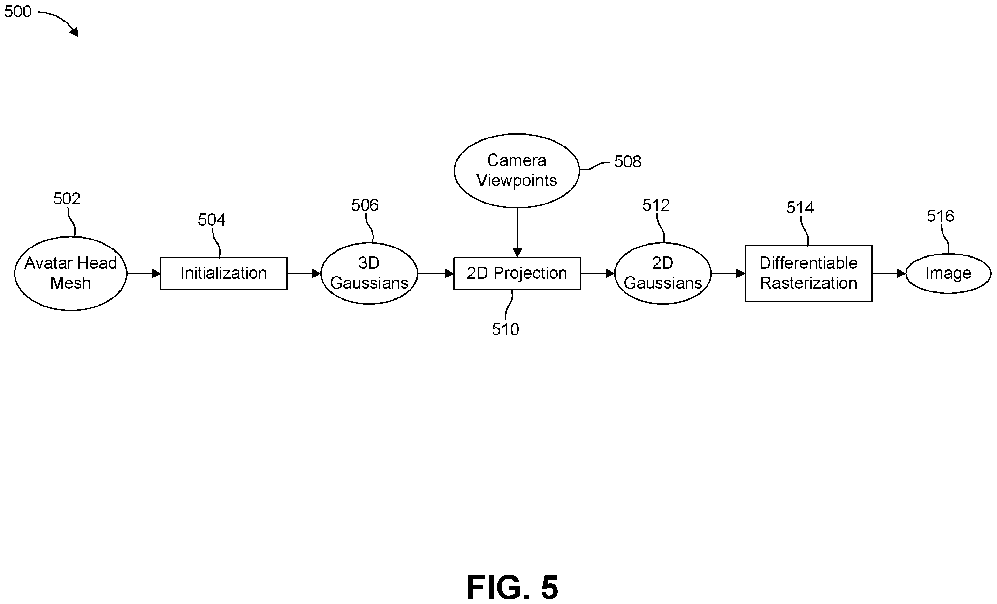

FIG. 5 is a flowchart illustrating a first example process for fitting the parameters of a 3D Gaussian splatting model to multiple views of a 3D scene according to some embodiments. FIG. 5 refers to the standard process described in *Kerbl.* FIG. 5 shows an example process 500 for fitting a 3DGS model to a set of images of a character head captured from different viewpoints by a setup of calibrated cameras.

Besides the views from the calibrated camera setup, a head mesh 502 fitted to the input views of the character head is provided as an input to the avatar 3DGS model fitting scheme. For some embodiments, this mesh 502 may be computed, according to known techniques, by optimizing the parameters of a 3D morphable face model so that its projections on the input viewpoints match the input view images.

The 3DGS model is initialized by an initialization process 504 based on the geometry of the head mesh 502. The initialization 504 may be performed, for instance, by assigning a predetermined number of Gaussians to each face of the mesh, positioning their centers to predetermined locations within their assigned mesh face, and computing their scale and orientation from the scale and orientation of this assigned face. The colors of the Gaussians may be initialized, for instance, to the color of their assigned location on the surface of the head mesh. The output of the initialization process 504 is a set of parameterized 3D Gaussians 506.

The 3D Gaussians 506 are projected via a 2D projection process 510 to the image planes of each of the input cameras, using the known viewpoints 508 of these cameras. The results of these projections are a set of 2D Gaussians 512 for each input camera.

A differentiable rasterization process 514 is applied, independently for each input camera, to the 2D projections 512 of the 3D Gaussian splatting model to reconstruct an image 516 of the head character for this input camera. An image 516 is created for each camera. For each input camera, the synthesized image 516 is matched to the ground truth input image captured by the camera. Using a gradient descent scheme, the matching error is backpropagated back to the parameters of the Gaussians in the 3D Gaussian Splatting model in order to update their values. This parameter update scheme based on backpropagation is iterated until convergence.

### Improved 3D Gaussian Splatting Avatar Model Fitting

Patent application '070 describes a method for improving the fidelity of 3DGS representation of avatars. The "hybrid" adjective in the title refers to the fact that the method combines optimization-based 3DGS fitting scheme with learning-based neural network components.

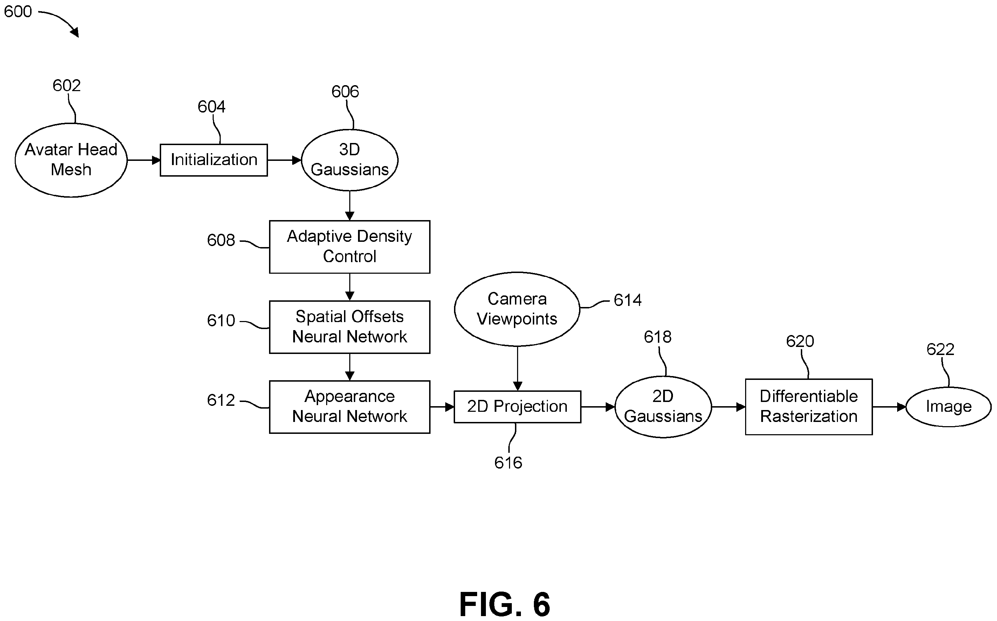

FIG. 6 is a flowchart illustrating a second example process for fitting the parameters of a 3D Gaussian Splatting model to multiple views of a 3D scene according to some embodiments. For some embodiments, the Gaussian Splatting parameterization may be enriched with Multi-Layer Perceptron (MLP) Neural Networks (NNs). This enrichment may result in an improved 3DGS fitting process with respect to the process depicted in FIG. 5. A method 600 for constructing an enriched 3DGS model of an avatar head is described below with reference to the flowchart of FIG. 6. The flowchart of FIG. 6 is a modified version of the flowchart of FIG. 5. For more information on Multi-Layer Perceptrons, see Grosse, Roger, *Lecture 5: Multilayer Perceptrons,* U. TORONTO, *available at:* cs<dot>toronto<dot>edu/~rgrosse/courses/csc321_2018/readings/L05%20Multilayer%20Perceptrons<dot> pdf.

The 3DGS model is initialized in an initialization process 604 by assigning a predetermined set of Gaussians to each face of the avatar head mesh 602 provided as an input to the fitting process. For some embodiments, the initialization process 604 is similar to the initialization process 504 illustrated in FIG. 5. The output of the initialization process 604 is a first set of parameterized 3D Gaussians 606.

A known adaptive density control algorithm 608 is performed to remove some of the 3D Gaussians in the first set 606 and to add new 3D Gaussians in regions of space where the details of the character head texture are not rendered with enough accuracy. One such algorithm, which is described in *Kerbl,* consists of removing 3D Gaussians whose opacities are very low and adding 3D Gaussians in regions where the updates on the positions of the 3D Gaussians have large magnitudes. The positions of the 3D Gaussians are updated by the backpropagation mechanism of the 3DGS model fitting process.

A Spatial Offsets Neural Network 610 is applied to the geometry parameters of each 3D Gaussian to estimate additive updates of these parameters. The additive updates are added to the geometry parameters of the 3D Gaussians in the same step. In some embodiments, updates to the positions of the centers of the 3D Gaussians are constrained to be collinear to the normal to the face of the head mesh to which the Gaussians are assigned. In some embodiments, an additional input that encodes the facial expression expressed by the captured avatar head is inputted to the Spatial Offsets Neural Network 610. For instance, if the 3DGS model is meant to represent a predetermined set of *N* facial expressions, the expression encoding may be a one-hot vector of *N* elements representing the expression set, with all elements set to 0 except the element representing the capture facial expression, which is set to 1. This additional input may improve the fidelity of the 3DGS model of the avatar head by adapting the parameters of the model to each facial expression. In some embodiments, the spatial offsets neural network 610 is a Multi-Layer Perceptron (MLP). In some embodiments, the Spatial Offsets Neural Network directly outputs the updated values of the geometry parameters of the Gaussians, instead of additive updates to these parameters.

An Appearance Neural Network 612 is applied to the color parameters of each 3D Gaussian to estimate additive updates of these parameters. The additive updates are added to the color parameters of the 3D Gaussians in the same step. In some embodiments, the appearance neural network 612 is a Multi-Layer Perceptron (MLP). In some embodiments, an additional input that encodes the facial expression expressed by the captured avatar head is inputted to the Appearance Neural Network 612. In some embodiments, the Appearance Neural Network directly outputs the updated values of the color parameters of the 3D Gaussians, instead of additive updates to these parameters.

In the 2D projection process 616, the 3D Gaussians 606 processed using an adaptive density control algorithm 608, a Spatial Offsets Neural Network 610, and an Appearance Neural Network 612 are projected to the image planes of each of the input cameras, using the known camera viewpoints 614 of these cameras. The results of these projections are a set of 2D Gaussians 618 for each input camera. For some embodiments, the 2D projection process 616 is identical to the 2D projection process 510 of FIG. 5.

A differentiable rasterization process 620 is applied to the 2D projections 618 of the 3D Gaussian Splatting model, independently for each input camera, to reconstruct an image 622 of the head character for this camera. An image 622 is created for each camera. For each camera, the synthesized image 622 is matched to the ground truth input image captured by the camera. Using a gradient descent scheme, the matching error is backpropagated back to the parameters of the 3D Gaussians in the 3D Gaussian splatting model to update their values. This parameter update scheme using backpropagation is iterated until convergence. For some embodiments, the differentiable rasterization process 620 is similar to the differentiable rasterization process 514 of FIG. 5.

The flowchart of FIG. 6 depicts the process for synthesizing an image of the avatar head from the current values of the parameters of a 3D Gaussian Splatting model, according to a viewpoint corresponding to one of the camera viewpoints providing the input images of the avatar head. Matching the synthesized image to the corresponding input image for the same viewpoint provides an indication of the errors in the current values of the 3DGS model parameters. The difference between the synthesized image and the input image is used to update the 3DGS model parameters. For instance, according toreferences, the 3DGS model parameters updates may be obtained by backpropagating the gradients of this image difference with respect to each of the parameters of the 3DGS model along the processing blocks of FIG. 6, and adding weighted values of these gradients to the current values of their corresponding parameters.

The method shown in FIG. 6. is an extension of the baseline 3D Gaussian Splatting model fitting method for avatars that is illustrated in FIG. 5. As mentioned above, FIG. 6 introduces three additional blocks: adaptive density control block 608, Spatial Offsets Neural Network block 610, and Appearance Neural Network block 612. The adaptive density control block 608 removes some of the initial Gaussians that do not significantly contribute to the avatar model and adds new Gaussians where needed to better account for the complexity of the avatar geometry and texture in some areas. The Spatial Offsets Neural Network block 610 represents a neural network that refines the geometry parameters of the 3D Gaussians. For some embodiments, this neural network is inputted with an additional input that encodes the facial expression of the avatar. In this setting, the hybrid mode 3DGS avatar model is conditioned on the facial expression of the avatar. The Appearance Neural Network block 612 represents another neural network that refines the appearance parameters of the 3D Gaussians. The Spatial Offsets Neural Network 610 and Appearance Neural Network 612 are inserted in the functional flow of operations for the formation of an image from the hybrid mode 3D Gaussian splatting avatar model. Hence, the weights and biases of the network may be updated using backpropagation of a loss along this functional flow, together with the parameters of the 3D Gaussians in the 3DGS model. The loss is computed as a measure of the discrepancy between the images reconstructed from the model for a plurality of input viewpoints and the corresponding ground truth input images for the same viewpoints.

### AJIF Avatar Representation

The Avatar JSON Interchange Format (AJIF) is specified in the '094 application and the `342 application. The AJIF description format of an avatar has the structure described in Table 1.

**Table 1.**

| **Name** | **Type** | **Description** | **Required** |
|---|---|---|---|
| data | RawData[1-*] | List of RawData | No |
| geometries | Geometry[1-*] | List of Geometry | No |
| nodes | Node [1-*] | List of Node | No |
| textures | Texture[1-*] | List of Texture | No |
| skeletons | Skeleton[1-*] | List of Skeleton | No |
| controllers | Controller[1-*] | List of Controller | No |
| lods | LOD[1-*] | List of LOD | No |
| metadata | Metadata | Metadata about the avatar | No |
| asset | Asset | Information about the file | Yes |
| models | Models[1-*] | Description of neural network models involved in the representation of the avatar | No |

All the elements of the top-level AJIF structure except "metadata" and "asset" are collections of items represented as lists (or arrays). Each item may be referenced with its index in the list. The first index in each list is zero.

In the `566 application, the AJIF format is extended to represent 3D Gaussian Splatting models of avatars that are bound to a mesh, as described above. To this end, as illustrated on Table 2, a "stitchedGM" property is added to the "Geometry" structure of AJIF that describes the meshes in the avatar description. This property holds a list of "StitchedGM" objects that represent a set of 3D Gaussian Splatting models attached to the current "Geometry". Table 2 provides description of the Geometry container object, including a description of a hybrid mode avatar 3D Gaussian Splatting model.

**Table 2.**

| **Name** | **Type** | **Description** | **Req.** |
|---|---|---|---|
| name | string | Geometry name. | No |
| vertices | integer | References an item in the "data" collection. The referenced item must be a float tensor [number of vertices, 3]. | Yes |
| normals | integer | References an item in the "data" collection. The referenced item must be a float tensor [number of vertices, 3]. | No |
| uvs | integer[1-*] | List of references to an item the "data" collection. The i-th referenced item must be a float tensor [number of uvs(i), 2]. | No |
| faces | Faces | A Faces object. | No |
| blendshapes | Blendshape[1-*] | List of Blendshape. | No |
| textures | Texture[1-*] | List of Texture. | No |
| stitchedGM | StitchedGM[1-*] | List of StitchedGM. | No |

A description of the "StitchedGM" type is provided in Table 3. The "anchors" property describes the positioning of the centers of the 3D Gaussians on the avatar mesh. Other properties of "StitchedGM" describe the geometric and appearance parameters of the 3D Gaussians, as described above.

**Table 3.**

| **Name** | **Type** | **Description** | **Req.** |
|---|---|---|---|
| name | string | The name of this mixture. | No |
| description | string | Describe the mixture. | No |
| type | string | The type of mixture, for instance "center" or "aligned". | Yes |
| purpose | string | The purpose of the mixture. | Yes |
| anchors | AnchorSet[1-*] | List of "AnchorSet". | Yes |
| normals | integer | References an item in the "data" collection with the Gaussian normals. The referenced item must be a float tensor [number of gaussians, 3]. | No |
| colors | integer | References an item in the "data" collection with the Gaussian colors. The referenced item must be a float tensor [number of gaussians, 3]. Cannot be present if "sphericalHarmonics" is present. | No |
| sphericalHarmonics | SphericalHarmonic[1-*] | List of "SphericalHarmonic". Cannot be present if "colors" is present. | No |
| alphas | integer | References an item in the "data" collection with the Gaussian opacities. The referenced item must be a float tensor [number of Gaussians]. | No |
| rotations | integer | References an item in the "data" collection with the rotations (quaternions). The referenced item must be a float tensor [number of Gaussians, 4]. | No |
| scales | integer | References an item in the "data" collection with the scales. The referenced item must be a float tensor [number of Gaussians, 3]. | No |

3D Gaussian Splatting models provide high-fidelity representations of avatars that may be used to transmit avatar descriptions to immersive virtual environment platforms. For the purpose of interoperability across platforms, it is necessary for some embodiments that such descriptions based on 3DGS models be standardized. A purpose of this application is to define a complete description of the hybrid mode 3D Gaussian Splatting model described above, so that any platform is able to render an image of the avatar under any viewpoint from the avatar description.

This application describes methods for representing a hybrid mode 3D Gaussian Splatting representation of an avatar that is exchanged between a sender device and a receiver device. For instance, in a typical setting, the sender device may be a user terminal equipment, and the receiver device may be a component of a virtual environment platform. The transmitted representation allows the receiver device to synthesize an image of the avatar from a prescribed viewpoint.

The following description is compliant with the AJIF avatar representation format that is presented above, but its meaning and use is generic. The data described below may be encoded in any other representation format, such as XML or USD.

The hybrid mode 3D Gaussian splatting model of an avatar, according to this application, is described by extending the "StitchedGM" type, introduced in the `566 application and illustrated in Table 3 above, with additional properties for some embodiments that represent the additional components of the hybrid mode model of this application with respect to the aforementioned baseline 3D Gaussian splatting model for avatars. A description of the extended "StitchedGM" type according to the application is provided on Table 4. Table 4 provides a description of the StitchedGM type extended according to the application to represent hybrid mode 3D Gaussian splatting avatar models.

**Table 4.**

| **Name** | **Type** | **Description** | **Req.** |
|---|---|---|---|
| name | string | The name of this mixture. | No |
| description | string | Describe the mixture. | No |
| type | string | The type of mixture, for instance "center" or "aligned". | Yes |
| purpose | string | The purpose of the mixture. | Yes |
| anchors | AnchorSet[1-*] | List of "AnchorSet". | Yes |
| normals | integer | References an item in the "data" collection with the Gaussian normals. The referenced item must be a float tensor [number of gaussians, 3]. | No |
| colors | integer | References an item in the "data" collection with the Gaussian colors. The referenced item must be a float tensor [number of gaussians, 3]. Cannot be present if "sphericalHarmonics" is present. | No |
| sphericalHarmon ics | SphericalHarmonic[ 1-*] | List of "SphericalHarmonic". Cannot be present if "colors" is present. | No |
| alphas | integer | References an item in the "data" collection with the Gaussian opacities. The referenced item must be a float tensor [number of Gaussians]. | No |
| rotations | integer | References an item in the "data" collection with the rotations (quaternions). The referenced item must be a float tensor [number of Gaussians, 4]. | No |
| scales | integer | References an item in the "data" collection with the scales. The referenced item must be a float tensor [number of Gaussians, 3]. | No |
| spatialOffsetsN etwork | integer | References the item in the AJIF "models" collection describing the Spatial Offsets neural network of the hybrid mode 3D Gaussian splatting avatar representation. | No |
| appearanceNetwo rk | integer | References an item in the AJIF "models" collection describing the Appearance neural network of the hybrid mode 3D Gaussian splatting avatar representation. | No |
| expressionEncod ingType | integer | Indication of the type of encoding used to represent the facial expression optionally input to "spatialOffsetsNetwork". Allowed values are 0 for blendshape encoding and 1 for Principal Component Analysis encoding. | No |

| If expressionEncodingType is present { | | | |
|---|---|---|---|
| expressionBasis | string | URN to the description of the representation basis for the facial expression of the avatar. | No |
| expressionWeigh tsCount | integer | Number of weights representing the facial expression of the avatar. | No |
| expressionWeigh ts | float [1-*] | Weights representing the facial expression of the avatar. | No |
| } | | | |

The additional properties introduced in the extended "StitchedGM" type of Table 4. are described below.

The "spatialoffsetsNetwork" property references the neural network, represented by block 610 of FIG. 6, that updates the geometrical properties of the 3D Gaussians in the hybrid mode Gaussian Splatting model that is the object of the application. The reference is described as the index of the neural network in the "models" collection of the AJIF description illustrated on Table 1.

The "appearanceNetwork" property references the neural network, represented by block 612 of FIG. 6, that updates the appearance properties of the 3D Gaussians in the hybrid mode Gaussian Splatting model that is the object of the application. The reference is described as the index of the neural network in the "models" collection of the AJIF description illustrated on Table 1.

In some embodiments, the "spatialOffsetsNetwork" network that updates the geometrical properties of the Gaussians is conditioned on an encoding of the facial expression of the avatar. When this is the case, for some embodiments, the "expressionEncodingType" property must be present in "StitchedGM" and describe the type of expression encoding used as an integer value. Two values of the property are allowed. A value of 0 indicates that the expression is encoded with reference to a basis of avatar blendshapes. A value of 1 indicates that the expression is encoded with reference to a basis of avatar mesh deformations obtained by performing a Principal Component Analysis (PCA) on a training dataset of mesh deformations.

For some embodiments, the "expressionBasis", "expressionWeights", and "expressionWeightsCount" properties presented below must be present in the "StitchedGM" description when the "expressionEncodingType" property is present. They describe the nature and the value of the facial expression code.

The "expressionBasis" property refers to a URN that provides a description of the reference blendshapes or Principal Component Analysis (PCA) basis used to define the facial expression encoding. This description must be consistent with the description of the avatar mesh in the AJIF "Geometries" container. In particular, the number of vertices in each blendshape or PCA basis vector must be identical to the number of vertices of the avatar mesh.

The "expressionweights" property holds a list of weights to be applied to the reference basis vectors described by the "expressionBasis" property to compute the deformation of the avatar mesh that represents the facial expression of the avatar to which the hybrid mode 3D Gaussian Splatting model is conditioned.

The "expressionWeightsCount" property defines the number of weight values used in "expressionWeights".

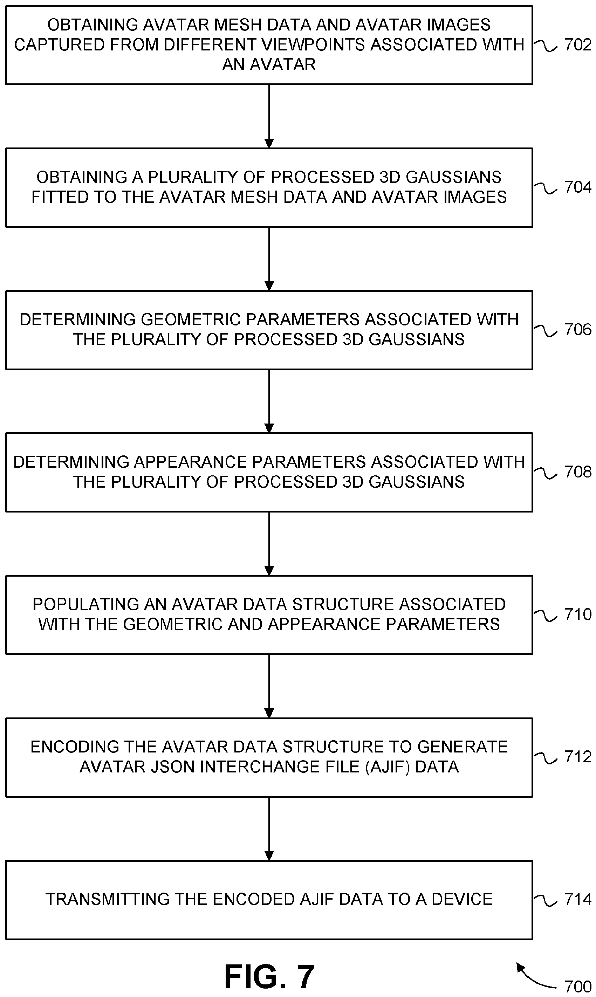

FIG. 7 is a flowchart illustrating an example process for generating AJIF data using 3D Gaussian splatting model parameters according to some embodiments. For some embodiments, an example process 700 may include obtaining 702 avatar mesh data and avatar images captured from different viewpoints associated with an avatar. For some embodiments, the example process 700 may further include obtaining 704 a plurality of processed 3D Gaussians fitted to the avatar mesh data and avatar images. For some embodiments, the example process 700 may further include determining 706 geometric parameters associated with the plurality of processed 3D Gaussians. For some embodiments, the example process 700 may further include determining 708 appearance parameters associated with the plurality of processed 3D Gaussians. For some embodiments, the example process 700 may further include populating 710 an avatar data structure associated with the geometric and appearance parameters. For some embodiments, the example process 700 may further include encoding 712 the avatar data structure to generate Avatar JSON Interchange File (AJIF) data. For some embodiments, the example process 700 may further include transmitting 714 the encoded AJIF data to a device.

An example method in accordance with some embodiments may include: obtaining encoded Avatar JSON Interchange File (AJIF) data; decoding the AJIF data; parsing the decoded AJIF data into an avatar data structure; parsing the avatar data structure to determine appearance parameters associated with a plurality of processed 3D Gaussians; parsing the avatar data structure to determine geometric parameters associated with the plurality of processed 3D Gaussians; and rendering images of the avatar from one or more prescribed viewpoints using the determined geometric and appearance parameters associated with the plurality of processed 3D Gaussians.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining avatar mesh data and avatar images captured from different viewpoints associated with an avatar; obtaining a plurality of processed 3D Gaussians fitted to the avatar mesh data and avatar images; determining geometric parameters associated with the plurality of processed 3D Gaussians; determining appearance parameters associated with the plurality of processed 3D Gaussians; populating an avatar data structure associated with the geometric and appearance parameters; encoding the avatar data structure to generate Avatar JSON Interchange File (AJIF) data; and transmitting the encoded AJIF data to a device.

For some embodiments of the example method, the avatar mesh data and the avatar images captured from different viewpoints correspond to a head of the avatar.

For some embodiments of the example method, the 3D Gaussians were processed using an adaptive density control process.

For some embodiments of the example method, the 3D Gaussians were processed using a spatial offsets neural network process.

For some embodiments of the example method, the 3D Gaussians were processed using an appearance neural network process.

Some embodiments of the example method may further include determining spatial offsets neural network parameters associated with the appearance parameters.

Some embodiments of the example method may further include determining appearance neural network parameters associated with the appearance parameters.

Some embodiments of the example method may further include determining an expression encoding type used to represent a facial expression corresponding to the avatar.

For some embodiments of the example method, the expression encoding type is either a blendshape-type encoding or a principal component analysis (PCA)-type encoding.

For some embodiments of the example method, populating the avatar data structure associated with the geometric and appearance parameters comprises populating an avatar expression type with the determined expression encoding type.

For some embodiments of the example method, determining appearance parameters further comprise: determining a representation basis for the facial expression; determining number of weights for representing the facial expression; and determining weights for representing the facial expression, wherein the appearance parameters comprise the representation basis for the facial expression, the number of weights for representing the facial expression, and the weights for representing the facial expression.

For some embodiments of the example method, populating the avatar data structure associated with the geometric and appearance parameters comprises populating the avatar data structure using the representation basis for the facial expression, the number of weights for representing the facial expression, and the weights for representing the facial expression.

Some embodiments of the example method may further include determining neural network parameters associated with a multilayer perceptron (MLP).

For some embodiments of the example method, fitting the avatar mesh data with a set of 3D Gaussians comprises initializing a three-dimensional Gaussian splatting (3DGS) model.

An example apparatus in accordance with some embodiments may include: a processor; and a memory storing instructions operative, when executed by the processor, to cause the apparatus to perform any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining avatar mesh data and avatar images captured from different viewpoints associated with an avatar;
obtaining a plurality of processed 3D Gaussians fitted to the avatar mesh data and avatar images;
determining geometric parameters associated with the plurality of processed 3D Gaussians;
determining appearance parameters associated with the plurality of processed 3D Gaussians;
populating an avatar data structure associated with the geometric and appearance parameters;
encoding the avatar data structure to generate Avatar JSON Interchange File (AJIF) data; and
transmitting the encoded AJIF data to a device.

2. The method of claim 1, wherein the avatar mesh data and the avatar images captured from different viewpoints correspond to a head of the avatar.

3. The method of any one of claims 1-2, wherein the 3D Gaussians were processed using an adaptive density control process.

4. The method of any one of claims 1-3, wherein the 3D Gaussians were processed using a spatial offsets neural network process.

5. The method of any one of claims 1-4, wherein the 3D Gaussians were processed using an appearance neural network process.

6. The method of any one of claims 1-5, further comprising determining spatial offsets neural network parameters associated with the appearance parameters.

7. The method of any one of claims 1-6, further comprising determining appearance neural network parameters associated with the appearance parameters.

8. The method of any one of claims 1-7, further comprising determining an expression encoding type used to represent a facial expression corresponding to the avatar.

9. The method of claim 8, wherein the expression encoding type is either a blendshape-type encoding or a principal component analysis (PCA)-type encoding.

10. The method of any one of claims 8-9, wherein populating the avatar data structure associated with the geometric and appearance parameters comprises populating an avatar expression type with the determined expression encoding type.

11. The method of any one of claims 8-10, wherein determining appearance parameters further comprise:
determining a representation basis for the facial expression;
determining number of weights for representing the facial expression; and
determining weights for representing the facial expression,
wherein the appearance parameters comprise the representation basis for the facial expression, the number of weights for representing the facial expression, and the weights for representing the facial expression.

12. The method of claim 11, wherein populating the avatar data structure associated with the geometric and appearance parameters comprises populating the avatar data structure using the representation basis for the facial expression, the number of weights for representing the facial expression, and the weights for representing the facial expression.

13. The method of any one of claims 1-12, further comprising determining neural network parameters associated with a multilayer perceptron (MLP).

14. The method of any one of claims 1-13, wherein fitting the avatar mesh data with a set of 3D Gaussians comprises initializing a three-dimensional Gaussian splatting (3DGS) model.

15. An apparatus comprising:
a processor; and
a memory storing instructions operative, when executed by the processor, to cause the apparatus to perform the method of any one of claims 1 through 14.
